# EUROPEAN PATENT APPLICATION

(11) **EP 3 020 646 A1**
(43) Date of publication of application: **18.05.2016**
(21) Application number: 15194567.2
(22) Date of filing: 13.11.2015
(51) Int. Cl.: B65D 19/44, B65D 81/107

(54) **PALLET AND CONVEYANCE SYSTEM**

(30) Priority: 14.11.2014 JP 2014232210
(71) Applicant: Toyota Jidosha Kabushiki Kaisha, Toyota-shi, Aichi 471-8571 (JP)
(72) Inventor: TAMURA, Masayuki, Osaka-shi, Osaka 541-8587 (JP); MATSUOKA, Hirofumi, Toyota-shi, Aichi 471-8571 (JP)
(74) Representative: TBK

(57) **Abstract**

A pallet (1) according to the present invention conveys a workpiece (10) mounted thereon, and the pallet (1) is equipped with a retaining member (3) that includes a bag member (4) formed of an elastic material, and a particle member (5) filled in the bag member (4) at a portion where the workpiece (10) is mounted, in the retaining member (3), the particle member (5) is deformed into a desired shape by increasing a volume ratio of the particle member (5) relative to an inner volume of the bag member (4) and the particle member (5) is stiffened while the desired shape of the particle member (5) is retained, wherein in the retaining member (3), the mounted workpiece (10) is pressed at the portion where the workpiece (10) is mounted so as to deform the particle member (5) into a shape corresponding to the workpiece (10), and the particle member (5) is stiffened while the shape corresponding to the workpiece (10) is retained.

## Description

### BACKGROUND OF THE INVENTION

### 1. Field of the Invention

The present invention relates to a technology regarding a pallet for use in conveyance of a workpiece and a conveyance system using the pallet.

### 2. Description of Related Art

In conveyance of workpieces using a conveyance system equipped with a conveyance section such as a roller conveyor, the workpieces have widely been conveyed in a manner as not to be directly placed on the conveyance section, but to be mounted on pallets during the conveyance. Mounting the workpieces on the pallets prevents the workpieces from being damaged, and facilitates transfer of the workpieces. Examples of such pallets for use in conveyance of workpieces are described in Japanese Utility Model Application Publication No. 5-336 and Japanese Patent Application Publication No. 6-56264 as described below, for example.

The pallets of the related arts described in JP 5-336 U and JP 6-56264 A have a configuration having a recessed portion corresponding to the shape of a workpiece, or a configuration including a clamping mechanism to fix the workpiece in order to maintain the posture of the workpiece, i.e. conveyance target mounted on the pallets, to be constant, and such configurations have generally and widely been employed.

Such pallets of the related arts are commonly used as dedicated pallets prepared for every type of workpieces, and if there are various types of workpieces, it is required to prepare different pallets in accordance with the types of the workpieces. Hence, there have been increased demands for pallets available in workpieces of various types. In the pallets of the related arts, some pallets have clamping mechanisms whose arrangement positions are changeable so as to handle the workpieces of various types, but it takes a long time to change the positions of the clamping mechanisms; therefore, it is difficult to quickly carry out set-up change for change in type among the workpieces. Consequently, there have also been needs for pallets capable of quickly coping with changing the types of the workpieces.

### SUMMARY OF THE INVENTION

The present invention provides a pallet and a conveyance system equipped with the pallet capable of easily handling plural types of workpieces, and also capable of attaining a secure conveyance of the workpieces without causing damages to the workpieces.

A configuration of the present invention will be described.

The configuration of the present invention is such that a pallet on which a workpiece is mounted is equipped with a retaining member that includes a bag member formed of an elastic material, and a particle member filled in the bag member at a portion of the pallet where the workpiece is mounted, in the retaining member, the particle member is deformed into a desired shape by increasing a volume ratio of the particle member relative to an inner volume of the bag member and the particle member is stiffened while the desired shape of the particle member is retained, wherein in the retaining member, the workpiece is pressed so as to deform the particle member into a shape corresponding to the workpiece, and the particle member is stiffened while the shape corresponding to the workpiece is retained.

As advantageous effects of one aspect of the present invention, the following effects are attained.

In the above pallet, it is possible to handle workpieces of various types using the pallet of a single type, and quickly cope with change in type among the workpieces.

In the above pallet, the pallet may further include an abutting member coming into contact with the workpiece retained by the retaining member.

In the above pallet, it is possible to securely retain the workpiece mounted on the pallet.

In the above pallet, the workpiece retained by the retaining member may be held by a plurality of abutting members.

In the above pallet, it is possible to securely retain the workpiece mounted on the pallet.

In the above pallet, a base member included in the pallet may include a wall portion surrounding a circumference of the retaining member.

In the above pallet, the retaining member may include a covering member whose material is selected depending on a material of the workpiece, and the covering member may cover a contact portion of the bag member, the contact portion of the bag member being in contact with the workpiece.

In the above pallet, it is possible to prevent the workpiece mounted on the pallet from being damaged.

In the above pallet, in a steady status, the retaining member may have a shape including a recessed portion.

A shape of each particle included in the particle member may include a shape having edge portions or a planar surface, or a shape having recesses and projections engageable with other particles.

A conveyance system includes: a pallet on which a workpiece is mounted; and a conveyance section that conveys the pallet, and the pallet in the conveyance system is equipped with a retaining member that includes a bag member formed of an elastic material, and a particle member filled in the bag member at a portion where the workpiece is mounted, in the retaining member, the particle member is deformed into a desired shape by increasing a volume ratio of the particle member relative to an inner volume of the bag member and the particle member is stiffened while the desired shape of the particle member is retained, wherein the retaining member includes: a ventilation port exhausting gas in an inside of the bag member; and a valve disposed in a middle of the ventilation port, and the conveyance system includes an exhaust unit that is a unit exhausting the gas from the inside of the bag member, and while the workpiece is pressed in the retaining member, the exhaust unit is coupled to the ventilation port, the exhaust unit exhausts the gas from the inside of the bag member so as to deform the retaining member into a shape corresponding to the workpiece, and subsequently, the valve is closed to retain the shape of the retaining member corresponding to the workpiece so that the workpiece is retained by the retaining member.

In the above conveyance system, it is possible to facilitate conveyance of the workpieces of plural types using the pallet, and also possible to quickly cope with change in type among the workpieces.

In the above conveyance system, by releasing the ventilation port, the retaining member may be restored from a shape corresponding to the workpiece to a shape in a steady status.

In the above conveyance system, it is possible to quickly cope with change in type among the workpieces.

In the above conveyance system, the pallet may further include an abutting member coming into contact with the workpiece retained by the retaining member.

In the above conveyance system, the workpiece retained by the retaining member may be held by a plurality of abutting members.

In the above conveyance system, a base member included in the pallet may include a wall portion surrounding a circumference of the retaining member.

In the above conveyance system, the retaining member may include a covering member whose material is selected depending on a material of the workpiece, and the covering member may cover a contact portion of the bag member, the contact portion of the bag member being in contact with the workpiece.

In the above conveyance system, the retaining member may have a shape including a recessed portion in a steady status.

In the above conveyance system, a shape of each particle included in the particle member may include a shape having edge portions or a planar surface, or a shape having recesses and projections engageable with other particles.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic drawing showing an outline of a configuration of a pallet according to a first embodiment of the present invention;
FIG. 2 is a schematic drawing showing a retaining member included in the pallet according to the first embodiment of the present invention;
FIG. 3 is a schematic drawing showing an aspect of retaining a workpiece by the pallet according to the first embodiment of the present invention;
FIG. 4A is a schematic drawing showing a pallet according to a second embodiment;
FIG. 4B is a schematic drawing showing a pallet according to a third embodiment;
FIG. 4C is a schematic drawing showing a pallet according to a fourth embodiment;
FIG. 5 is a schematic drawing showing an aspect of retaining the workpiece by the pallet according to the second embodiment of the present invention;
FIG. 6 is a schematic drawing showing an aspect of retaining the workpiece by the pallet according to the third embodiment of the present invention;
FIG. 7 is a schematic drawing showing an aspect of retaining the workpiece by the pallet according to the fourth embodiment of the present invention;
FIG. 8 is a schematic drawing showing a conveyance procedure of the pallet using a conveyance system according to one embodiment of the present invention; and
FIG. 9 is a schematic drawing showing a conveyance procedure of the pallet using a conveyance system according to one embodiment (another embodiment) of the present invention.

### DETAILED DESCRIPTION OF EMBODIMENTS

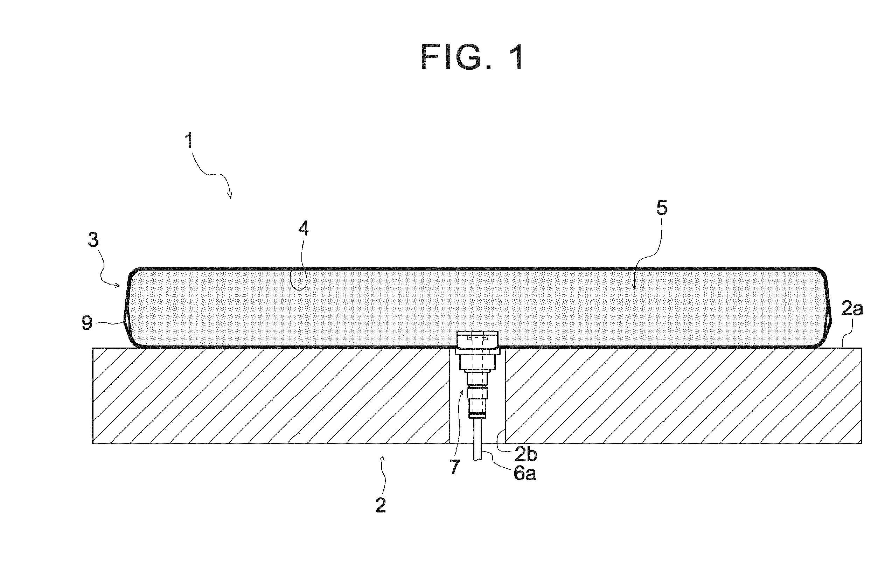

Embodiments of the present invention will be described hereinafter. First, an outline of a configuration of a pallet according to one embodiment of the present invention will be described with reference to FIG. 1 to FIG. 7. The pallet is used for conveying a workpiece in such a manner that the workpiece is not mounted directly on a conveyance passage, but on the pallet in order to facilitate transfer of the workpiece, attain stable conveyance of the workpiece having an unstable shape, or protect the workpiece during the conveyance.

A configuration of the pallet according to the first embodiment of the present invention will be described as follows. As shown in FIG. 1, the pallet 1 according to the first embodiment of the present invention includes a base member 2 that is a substantially tabular member, a retaining member 3, and others. The base member 2 is a member equivalent to a pallet used in the related arts, and the retaining member 3 is fixed onto an upper surface 2a of the base member 2 with adhesive, bolts and nuts (not shown), or the like. The pallet 1 includes the retaining member 3 on the upper surface 2a of the base member 2 that is a portion on which the workpiece is mounted, and the workpiece mounted on the pallet 1 is retained by the retaining member 3 disposed between the base member 2 and the workpiece. A hole 2b vertically extending through the base member 2 is formed at a substantially center position of the base member 2, and a vacuum pipe described later is connected to the retaining member 3 through the hole 2b.

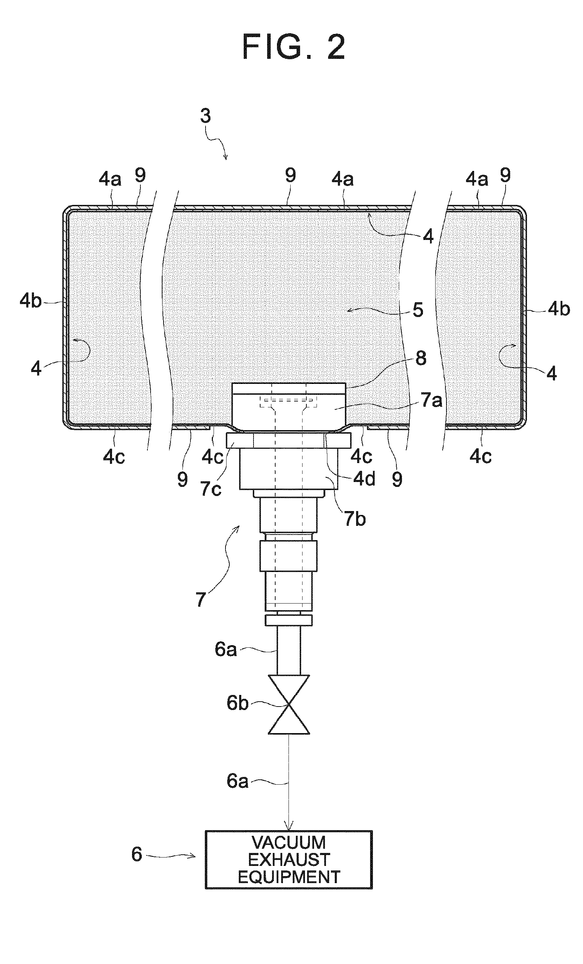

The retaining member 3 will be described more in details as below. As shown in FIG. 2, the retaining member 3 includes a bag member 4 that is an elastic member in a substantially bag shape, and a particle member 5 filled in the bag member 4, and the retaining member 3 is flexibly deformable in a steady status. It should be noted that the "steady status" herein denotes a status in which an inner pressure of the bag member 4 is approximate to the atmospheric pressure, so that the particle member 5 in the bag member 4 has fluidity (the same applies to the following).

The bag member 4 includes: a front surface 4a constituting a surface on which the workpiece is mounted; a side surface 4b that is a surface continuing from the front surface 4a, substantially orthogonally intersecting the front surface 4a, and defining a thickness of the retaining member 3; and a back surface 4c that is a surface continuing from the side surface 4b, substantially orthogonally intersecting the side surface 4b, and serving as a surface allowing the retaining member 3 to be disposed to the upper surface 2a of the base member 2. In the present embodiment, it is exemplified that the bag member 4 has a substantially rectangular parallelepiped mat shape, but the shape of the bag member in an abutting member included in the pallet according to the present invention is not limited to this shape.

The bag member 4 of the present embodiment is a member formed of a nitrile rubber (NBR) having elasticity and air-tightness, and formed by laminating substantially rectangular sheets made of NBR through vulcanizing adhesion into a substantially rectangular parallelepiped bag shape. A hole 4d is formed in the back surface 4c of the bag member 4, and a connection port 7 that is a member communicating the inside and the outside of the bag member 4 is disposed to the hole 4d. A nut 7c is screwed and fastened to the connection port 7 through sealing members 7a, 7b, thereby fitting the connection port 7 to the hole 4d while securing the air tightness of the hole 4d. In the present embodiment, it is exemplified that a nitrile rubber (NBR) is employed as a material of the bag member 4, but the material of the bag member 4 is not limited to this, and the material may be selectively employed from various materials depending on the condition such as an operational environment as far as the selected material has elasticity and air-tightness.

In addition, a filter 8 is disposed to an end of the connection port 7 contained in the bag member 4. In the present embodiment, the connection port 7 is disposed to the back surface 4c of the bag member 4, but the position of the connection port 7 may be appropriately selected in relation with the position of the vacuum pipe described later, and the connection port 7 may be disposed to the front surface 4a or the side surface 4b. The particle member 5 is filled in the bag member 4.

The particle member 5 is a member formed of a number of particles filled in the retaining member 3 (more specifically, the bag member 4), and is stiffened in any shape in a state in which the bag member 4 and the particle member 5 become integrated by discharging air from the inside of the bag member 4 to decompress the inside of the bag member 4, thereby tightly compacting the particles of the particle member 5 to one another. In other words, in a state in which the inside of the bag member 4 is decompressed, the retaining member 3 firmly maintains a corresponding shape formed before the decompression. The retaining member 3 is configured to prevent the particle member 5 filled inside the bag member 4 from being discharged from the connection port 7 by the filter 8.

In the pallet 1 according to the present embodiment, it is exemplified that the particle member 5 and the air are present in the bag member 4, but in the retaining member included in the pallet according to the present invention, the type of the fluid present together with the particle member in the abutting member (bag member) is not limited to air, and gas or liquid other than air may be present together with the particle member in the bag member.

As the particle member 5 filled in the retaining member 3, it is suitable that each of the particles constituting the particle member has a shape other than a substantially spherical shape, such as a shape having edge portions or a plane surface (e.g., crushed ceramic materials or the like), or a shape having recesses and projections capable of engaging with other particles. The "substantially spherical shape" referred to herein denotes that an outer shape has none of edge portions, a plane surface, or recesses and projections capable of engaging with other particles, and thus the shape may be unnecessary to be a perfect spherical shape; and for example, this shape is a conceptual shape including an oval spherical shape, a barrel shape, and others.

As shown in FIG. 2, the bag member 4 of the retaining member 3 is connected to vacuum exhaust equipment 6. The vacuum exhaust equipment 6 constitutes a section that stiffens the retaining member 3, and includes a not-shown exhaust unit, and further includes a vacuum pipe 6a communicated with the exhaust unit, and a valve 6b disposed in the middle of the vacuum pipe 6a.

The valve 6b is automatically opened and closed in accordance with timing of connection or disconnection of the exhaust unit included in the vacuum exhaust equipment 6, or timing of start or end of exhaustion by the exhaust unit. Specifically, the valve 6b is automatically opened and closed in such a manner that the valve 6b is set to be opened when the air is exhausted from the inside of the bag member 4, the inside of the bag member 4 is in the steady status, or the inside of the bag member 4 is restored to the steady status, and the valve 6b is set to be closed when the pressure (negative pressure status) in the inside of the bag member 4 is maintained. A vacuum pump, an ejector, or the like may be employed as the exhaust unit included in the vacuum exhaust equipment 6.

The retaining member 3 is configured such that the air is exhausted from the inside of the bag member 4 by the vacuum exhaust equipment 6 so as to decompress the inside of the bag member 4, thus increasing a volume ratio of the particle member 5 relative to an inner volume of the bag member 4; therefore, the particles of the particle member 5 filled in the bag member 4 are more tightly packed to one another, thereby stiffening the particle member 5 and firmly retaining this stiff shape.

The retaining member 3 configured in this manner can be deformed into a shape corresponding to the workpiece if the workpiece is pressed against the front surface 4a in the steady status (flexible status). While the retaining member 3 is deformed in the shape corresponding to the outer surface shape of the workpiece, the vacuum exhaust equipment 6 is operated, thereby stiffening the retaining member 3 in a state of being deformed in the shape corresponding to the workpiece; and at this time, it is possible to form a stiff recessed portion 3a in a shape corresponding to the shape of the workpiece by the retaining member 3, thus retaining the workpiece in this recessed portion 3a.

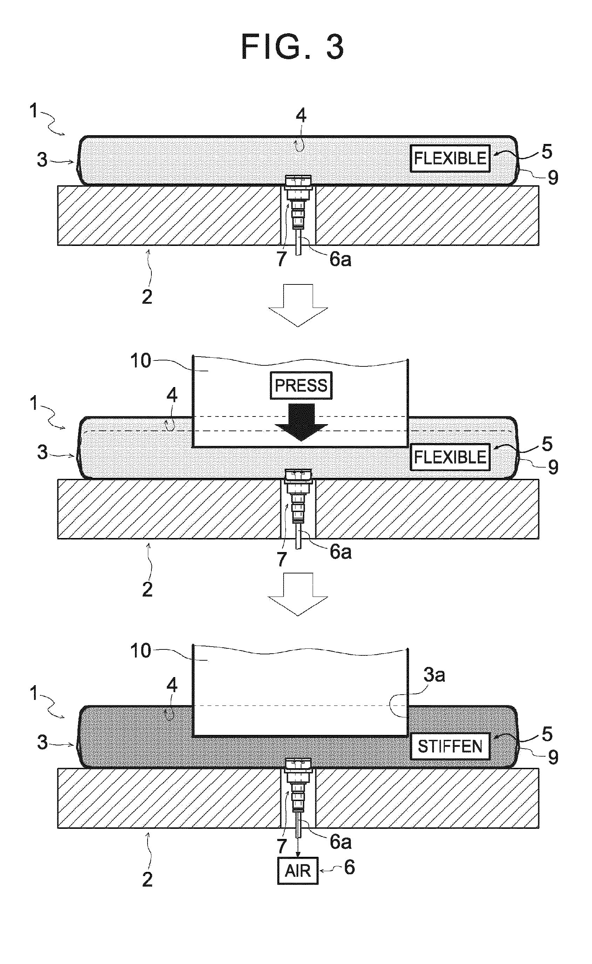

The retaining procedure of the workpiece by the pallet 1 according to the first embodiment of the present invention will be described as below. As shown in an uppermost drawing of FIG. 3, the pallet 1 is configured such that the retaining member 3 is flexibly deformable before a state in which a workpiece 10 is mounted on the pallet 1. In this state, no air is exhausted from the retaining member 3 through the vacuum pipe 6a, and the inside of the bag member 4 is maintained to be approximate to the atmospheric pressure so that the particle member 5 is in a fluid state.

As shown in a middle drawing of FIG. 3, the workpiece 10 is pressed against the retaining member 3 when the workpiece 10 is mounted on the pallet 1. It may also be configured that the workpiece 10 is not pressed against the retaining member 3, but is fitted into the retaining member 3 with a self-weight of the workpiece 10. At this time, the retaining member 3 becomes flexibly deformed, and a portion of the retaining member 3 in contact with the workpiece 10 becomes deformed in a shape corresponding to the workpiece 10. At this time, no air is exhausted from the retaining member 3 through the vacuum pipe 6a, and the inside of the bag member 4 is maintained to be approximate to the atmospheric pressure so that the particle member 5 is in a fluid state.

As shown in a lowermost drawing of FIG. 3, after the workpiece 10 is mounted on the pallet 1, the air is exhausted from the inside of the bag member 4 through the vacuum pipe 6a by the vacuum exhaust equipment 6. At this time, the air is removed from the inside of the bag member 4 of the retaining member 3, and the retaining member 3 gradually becomes stiffened in the shape corresponding to the workpiece 10 as negative pressure is applied to the inside of the bag member 4, so that the recessed portion 3a in the shape corresponding to the workpiece 10 is formed in the retaining member 3. The pallet 1 configured in this manner can stably retain the workpiece 10 in the recessed portion 3a.

The shape of the recessed portion 3a is maintained as far as the inside of the bag member 4 is maintained to be in a negative pressure state even if the workpiece 10 is removed from the recessed portion 3a. Hence, if the pallet 1 is used for the purpose of repetitive conveyance of the workpieces 10 having the same shape, it is unnecessary to carry out softening and stiffening of the retaining member 3 every time the workpiece 10 is mounted and removed relative to the pallet 1. Of course, even in this case, the softening and stiffening of the retaining member 3 may also be carried out every time the workpiece 10 is mounted and removed relative to the pallet 1.

If the pallet 1 is used for the purpose of conveyance of the workpieces 10 in various shapes, the softening and stiffening of the retaining member 3 is carried out every time the workpiece 10 is mounted and removed relative to the pallet 1, thereby handling the workpieces 10 in various shapes using the pallet 1 of a single type. Specifically, by using the pallet 1 according to the first embodiment of the present invention, it is unnecessary to carry out set-up change every time the shape of the workpiece 10 is changed, thus efficiently operating the production line, and it is unnecessary to prepare pallets for the workpieces 10 in all different shapes; accordingly, this is economical, and also contributes to improvement of production efficiency as well as reduction in production cost of the workpiece 10.

As shown in FIG. 1 and FIG. 2, in the pallet 1 according to the first embodiment of the present invention, the retaining member 3 is covered with a covering member 9. The covering member 9 is a member that covers the retaining member 3, and a material forming the covering member 9, such as resin, cloth, and leather, is selected depending on the property of the workpiece that is a conveyance target by the pallet 1.

Covering the retaining member 3 with the covering member 9 eliminates direct contact between the workpiece and the retaining member 3, thereby enhancing life duration of the retaining member 3. Because the retaining member 3 is covered with the covering member 9, the workpiece comes into contact with the covering member 9, and thus it is possible to prevent the workpiece from small flaws such as scratches by selecting the material of the covering member 9 depending on the property of the workpiece, thereby attaining improvement of quality of the workpiece. In the present embodiment, it is exemplified that the entire retaining member 3 is covered with the covering member 9, but it is only necessary for the covering member 9 to cover at least a portion of the surface of the retaining member 3 that comes into contact with the workpiece 10.

Specifically, in the pallet 1 according to the first embodiment of the present invention, the retaining member 3 includes the covering member 9 whose material is selected depending on the material of the workpiece 10, and the contact portion of the bag member 4 , the contact portion of the bag member is in contact with the workpiece 10, is covered with the covering member 9. This configuration prevents the workpiece 10 mounted on the pallet 1 from being damaged.

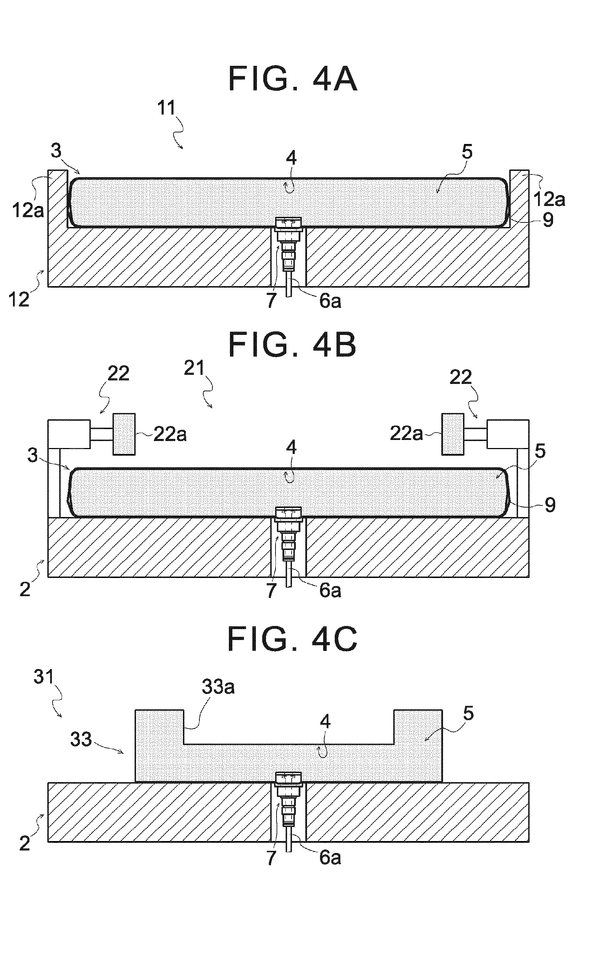

A configuration of a pallet according to other embodiments will be described herein. FIG. 4A shows a pallet 11 according to the second embodiment of the present invention. The pallet 11 has a feature in a shape of a base member 12, and the other configurations thereof may be common to the configurations of the pallet 1 according to the first embodiment.

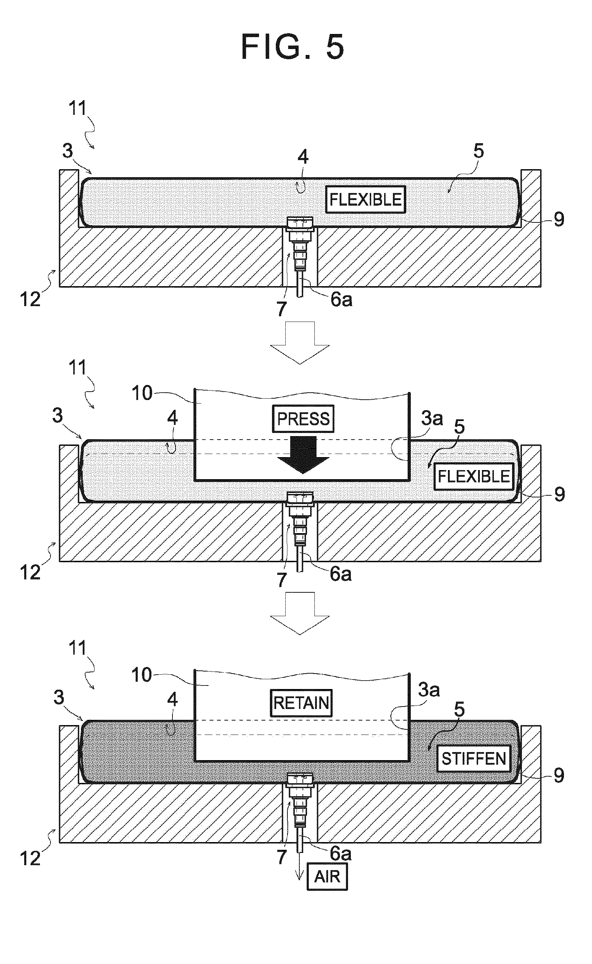

The base member 12 included in the pallet 11 according to the second embodiment of the present invention includes a wall portion 12a surrounding a circumference of the retaining member 3. Outward deformation of the retaining member 3 is restricted by the wall portion 12a, and thus the thickness of the retaining member 3 of the pallet 11 can be maintained to be greater than that of the pallet 1. In the pallet 11, as shown in FIG. 5, by maintaining the thickness of the retaining member 3 to be greater, it is possible to increase a depth of the recessed portion 3a; therefore it becomes possible to more stably retain the workpiece 10 in the recessed portion 3a.

FIG. 4B shows a pallet 21 according to the third embodiment of the present invention. The pallet 21 has a feature in a narrow-pressing mechanism 22 provided to the base member 2, and the other configurations thereof may be common to the configurations of the pallet 1 according to the first embodiment.

The narrow-pressing mechanism 22 included in the pallet 21 according to the third embodiment of the present invention includes plural (two in the present embodiment) abutting members 22a, 22a. The narrow-pressing mechanism 22 included in the pallet 21 may include only a single abutting member 22a. The workpiece 10 retained in the recessed portion 3a is pressed in the lateral direction by the single abutting member 22a, thereby increasing a retaining force applied to the workpiece 10 in the pallet 1.

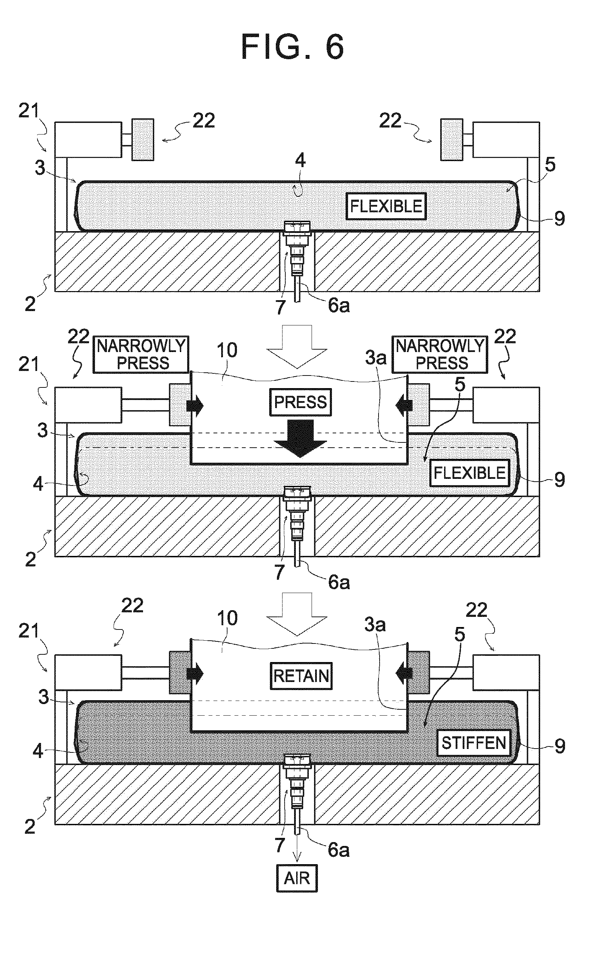

In the pallet 21 equipped with the narrow-pressing mechanism 22, as shown in FIG. 6, the workpiece 10 is narrowly pressed by the plural (two in the present embodiment) abutting members 22a, 22a, thereby further enhancing the retaining force applied to the workpiece 10 by the retaining member 3 through the narrow-pressing mechanism 22; therefore, it is possible to more stably retain the workpiece 10.

Preferably, the abutting member 22a is configured in the same manner as that of the retaining member 3, the abutting member 22a is formed of the bag member 4 and the particle member 5, and the inside of the bag member 4 is vacuumed so as to stiffen the abutting member 22a. The abutting member 22a having the same configuration as that of the retaining member 3 can be stiffened in a shape corresponding to a shape of a side surface of the workpiece 10, thus firmly retaining the workpiece 10 from the both side surfaces thereof.

Preferably, each abutting member 22a is covered with the same material as the material of the covering member 9 in the same manner as the retaining member 3, and by covering each abutting member 22a with the same material as that of the covering member 9, the workpiece 10 can be prevented from scratches due to contact with each abutting member 22a.

Specifically, the pallet 21 according to the third embodiment of the present invention further includes each abutting member 22a that is a member coming into contact with the workpiece 10 retained by the retaining member 3, and the workpiece 10 retained by the retaining member 3 is held by the plural abutting members 22a, 22a. Through this configuration, it is possible to securely retain the workpiece 10 mounted on the pallet 21.

FIG. 4C shows a pallet 31 according to a fourth embodiment of the present invention. The pallet 31 has a feature in the shape of a retaining member 33, and the other configurations thereof may be common to the configurations of the pallet 1 according to the first embodiment.

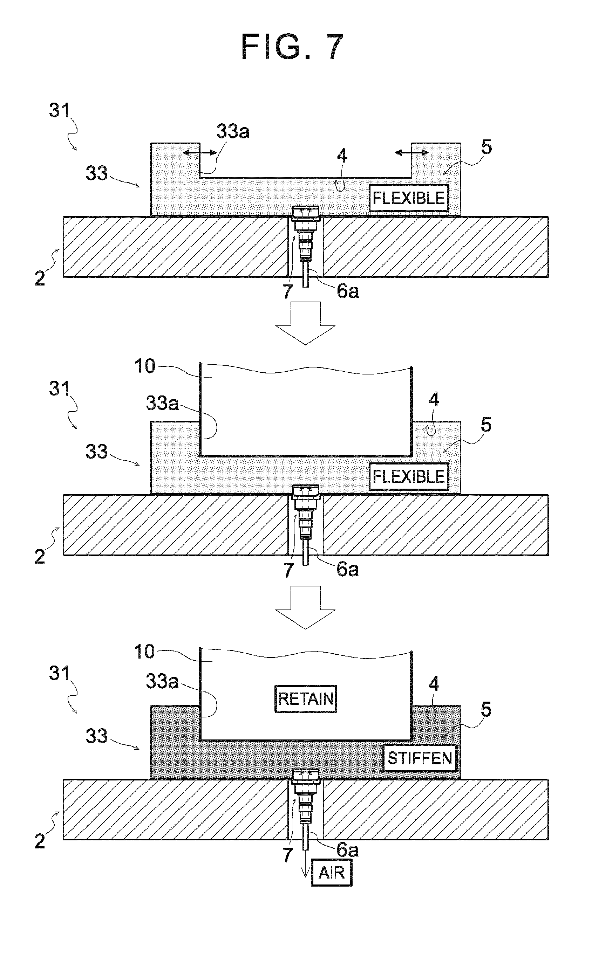

As shown in FIG. 7, the retaining member 33 included in the pallet 31 according to the fourth embodiment of the present invention previously includes a recessed portion 33a in the steady status. The retaining member 33 is configured to be flexibly deformable in the steady status, and thus the shape of the recessed portion 33a can be deformed in the steady status. If there is slight variation in shape among the workpieces 10, and this variation is slight enough for each workpiece 10 to be pushed into the recessed portion 33a, the workpiece 10 is pushed into the recessed portion 33a, and subsequently, the retaining member 33 is stiffened, thereby securely retaining the workpiece 10 regardless of the variation in shape of the workpiece 10.

The workpiece 10 is mounted on each of the aforementioned pallets 1, 11, 21, 31 according to one embodiment of the present invention, and each pallet is equipped with the retaining member 3 that includes the bag member 4 formed of an elastic material, and the particle member 5 filled in the bag member 4 at a portion where the workpiece 10 is mounted, and the retaining member 3 is capable of stiffening the particle member 5 while retaining the particle member 5 in any shape by increasing the volume ratio of the particle member 5 relative to the inner volume of the bag member 4. The mounted workpiece 10 is pressed in the portion of the retaining member 3 where the workpiece 10 is mounted, thereby deforming the particle member 5 into a shape corresponding to the workpiece 10 as well as stiffening the particle member 5 while the shape corresponding to the workpiece 10 is retained. Through this configuration, it is possible to handle the workpieces 10 in various shapes with the pallet 1 of a single type, and also possible to quickly cope with change in type among the workpieces 10.

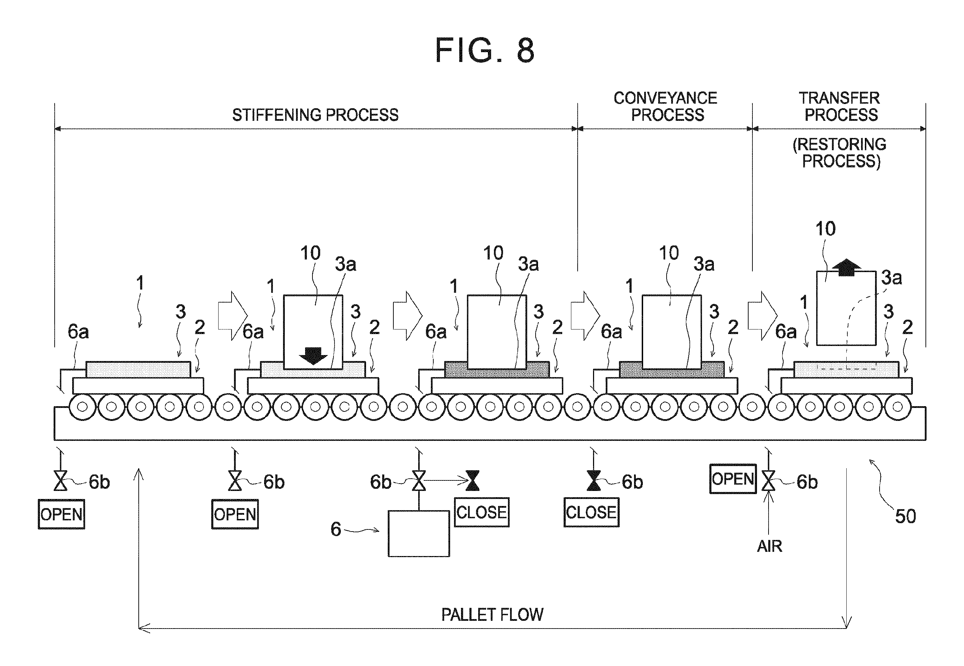

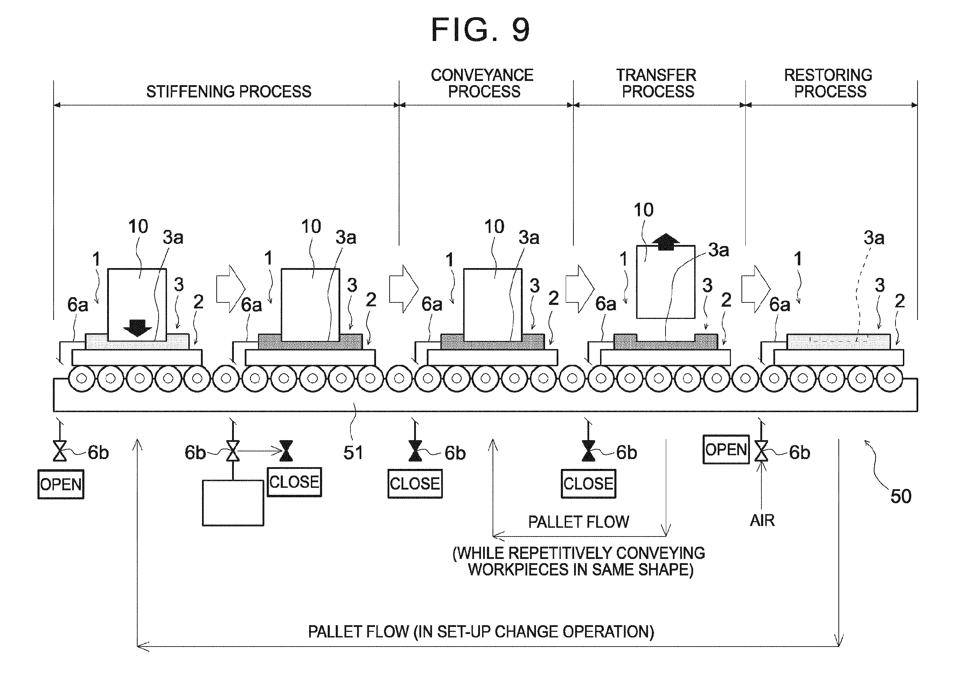

A conveyance procedure of the workpiece through a conveyance system according to one embodiment of the present invention will be described with reference to FIG. 8 and FIG. 9. As shown in FIG. 8, the conveyance system 50 according to one embodiment of the present invention includes conveyance rollers 51 as a conveyance section, and the workpiece 10 is conveyed while being mounted on the pallet 1 along a conveyance passage formed by the conveyance rollers 51. In the present embodiment, it is exemplified that the aforementioned pallet 1 is used in the conveyance system 50, but each of the pallets 11,21,31 may also be used in the conveyance system 50.

In the conveyance system 50, the conveyance rollers 51 are arranged in a process of stiffening the retaining member 3 of the pallet 1 (referred to as a stiffening process hereinafter). Specifically, in the conveyance operation of the workpiece 10 using the conveyance system 50, in the stiffening process, the workpiece 10 is mounted on the pallet 1 disposed on the conveyance rollers 51.

At the start of the stiffening process, the retaining member 3 of the pallet 1 is maintained in the steady status by setting the valve 6b to be opened. In the stiffening process, subsequently, the workpiece 10 is mounted on the pallet 1, and the workpiece 10 is pressed against the retaining member 3 of the pallet 1 so as to form the recessed portion3a. In the stiffening process, at a stage in which the workpiece 10 is positioned on the pallet 1 and the shape of the recessed portion 3a is defined, the air is exhausted from the inside of the bag member 4 (not shown) by the vacuum exhaust equipment 6 so as to stiffen the retaining member 3, and thereafter, the valve 6b is set to be closed to maintain the stiffened state.

In the conveyance system 50, the conveyance rollers 51 are arranged in a process of conveying the workpiece 10 on the pallet 1 while retaining the workpiece 10 by the retaining member 3 (referred to as a conveyance process hereinafter). Specifically, in the conveyance system 50, in the conveyance process, the workpiece 10 is conveyed while being retained by the pallet 1 (more specifically the retaining member 3) disposed on the conveyance rollers 51.

Through the conveyance process, at the time when the pallet 1 reaches a predetermined position, the workpiece 10 is transferred from the pallet 1. In the conveyance system 50, the conveyance rollers 51 are arranged in a process of transferring the workpiece 10 from the pallet 1 (referred to as a transfer process hereinafter). In the conveyance system 50, in the transfer process, at the time when the pallet 1 reaches the predetermined position, the workpiece 10 is removed (transferred) from the pallet 1 (more specifically the retaining member 3) disposed on the conveyance rollers 51. In the conveyance system 50, in the transfer process, at the time when the pallet 1 reaches the predetermined position, the valve 6b is set to be opened so as to restore the retaining member 3 of the pallet 1 to the steady status. At this time, the recessed portion 3a disappears. When the valve 6b is set to be opened, air flows into the bag member 4 (not shown), and fluidity of the particle member 5 (not shown) is restored; thus the workpiece 10 can be easily removed from the retaining member 3.

An operation procedure of the conveyance system 50 as shown in FIG. 8 is effective particularly in the workpieces 10 in plural different shapes.

As aforementioned, in the conveyance system 50 according to one embodiment of the present invention, the valve 6b is set to be opened so as to release the vacuum pipe 6a, thereby restoring the retaining member 3 from the shape corresponding to the workpiece 10 to the shape in the steady status. Through this configuration, it is possible to quickly cope with change in type among the workpieces 10.

Herein, an operation procedure of the conveyance system 50 handling the workpieces 10 in the same shape will be described with reference to FIG. 9.

In the case of handling each of the workpieces 10 in the same shape in the conveyance system 50 according to one embodiment of the present invention, as shown in FIG. 9, it is configured that the pallet 1 after the transfer process is not returned to the stiffening process, but to the conveyance process while maintaining the recessed portion 3a of the retaining member 3 in order to repetitively reuse the recessed portion 3a. Specifically, in the conveyance system 50, as far as the workpieces 10 having the same shape are handled, once the recessed portion 3a is formed in the retaining member 3, the pallet 1 can be reused as it is as long as the shape of the workpiece 10 is not changed.

In the conveyance system 50, the restoring process is carried out only when the shape of the workpiece 10 is changed, and subsequently, the stiffening process is carried out, thereby quickly coping with the set-up change for change in shape among the workpieces using the same pallet 1.

Specifically, the conveyance system 50 according to one embodiment of the present invention is a system including: the pallet 1 on which the workpiece 10 is mounted; and the conveyance rollers 51 that are the conveyance section conveying the pallet 1, and the pallet 1 is equipped with the retaining member 3 including the bag member 4 formed of an elastic material, and the particle member 5 filled in the bag member 4 at a portion where the workpiece is mounted, and the retaining member 3 is capable of stiffening the particle member 5 while retaining the particle member 5 in any shape by increasing the volume ratio of the particle member 5 relative to the inner volume of the bag member 4. The retaining member 3 includes the connection port 7 that is a ventilation port for exhausting the air from the inside of the bag member 4, and the valve 6b disposed in the middle of the vacuum pipe 6a connected to the connection port 7. In addition, the conveyance system 50 includes the vacuum exhaust equipment 6 that is the exhaust unit serving as a unit exhausting the gas from the inside of the bag member 4; while the workpiece 10 is pressed in the retaining member 3, the vacuum exhaust equipment 6 is coupled to the vacuum pipe 6a, and the gas is exhausted from the inside of the bag member 4 by the vacuum exhaust equipment 6, thereby deforming the retaining member 3 into a shape corresponding to the workpiece 10, and subsequently, the valve 6b is closed to retain the shape of the retaining member 3 corresponding to the workpiece 10 so as to retain the workpiece 10 by the retaining member 3. Through this configuration, it is possible to cope with the conveyance of the workpieces 10 having plural types of shapes using the pallet 1, and it is also possible to quickly cope with the set-up change of the workpiece 10.

A pallet (1) according to one embodiment of the present invention conveys a workpiece (10) mounted thereon, and the pallet (1) is equipped with a retaining member (3) that includes a bag member (4) formed of an elastic material, and a particle member (5) filled in the bag member (4) at a portion where the workpiece (10) is mounted, in the retaining member (3), the particle member (5) is deformed into a desired shape by increasing a volume ratio of the particle member (5) relative to an inner volume of the bag member (4) and the particle member (5) is stiffened while the desired shape of the particle member (5) is retained, wherein in the retaining member (3), the mounted workpiece (10) is pressed at the portion where the workpiece (10) is mounted so as to deform the particle member (5) into a shape corresponding to the workpiece (10), and the particle member (5) is stiffened while the shape corresponding to the workpiece (10) is retained.

## Claims

1. A pallet (1) on which a workpiece (10) is mounted, **characterized by** comprising
a retaining member (3) that includes a bag member (4) formed of an elastic material, and a particle member (5) filled in the bag member (4) at a portion where the workpiece (10) is mounted, wherein
in the retaining member (3), the particle member (5) is deformed into a desired shape by increasing a volume ratio of the particle member (5) relative to an inner volume of the bag member (4) and the particle member (5) is stiffened while the desired shape of the particle member (5) is retained, and
wherein
in the retaining member (3), the workpiece (10) is pressed so as to deform the particle member (5) into a shape corresponding to the workpiece (10), and the particle member (5) is stiffened while the shape corresponding to the workpiece (10) is retained.

2. The pallet (1) according to claim 1, further comprising
an abutting member coming into contact with the workpiece (10) retained by the retaining member (3).

3. The pallet (1) according to claim 2, wherein
the workpiece (10) retained by the retaining member (3) is held by a plurality of abutting members.

4. The pallet (1) according to claim 1, wherein
a base member included in the pallet (1) includes a wall portion surrounding a circumference of the retaining member (3).

5. The pallet (1) according to any one of claims 1 to 4, wherein
the retaining member (3) includes a covering member (9) whose material is selected depending on a material of the workpiece (10), and the covering member (9) covers a contact portion of the bag member (4), the contact portion of the bag member (4) being in contact with the workpiece (10).

6. The pallet (1) according to claim 1, wherein
the retaining member (3) has a shape including a recessed portion (33a) in a steady status.

7. The pallet (1) according to any one of claims 1 to 6, wherein
a shape of each particle included in the particle member (5) includes a shape having edge portions or a planar surface, or a shape having recesses and projections engageable with other particles.

8. A conveyance system including a pallet (1) on which a workpiece (10) is mounted and a conveyance section that conveys the pallet (1), **characterized by** comprising:
the pallet (1) equipped with a retaining member (3) that includes a bag member (4) formed of an elastic material, and a particle member (5) filled in the bag member (4) at a portion where the workpiece (10) is mounted, wherein
in the retaining member (3), the particle member (5) is deformed into a desired shape by increasing a volume ratio of the particle member (5) relative to an inner volume of the bag member (4) and the particle member (5) is stiffened while the desired shape of the particle member (5) is retained,
the retaining member (3) includes: a ventilation port exhausting gas from an inside of the bag member (4); and a valve disposed in a middle of the ventilation port,
the conveyance system includes an exhaust unit that exhausts the gas from the inside of the bag member (4), and
while the workpiece (10) is pressed in the retaining member (3), the exhaust unit is coupled to the ventilation port, the exhaust unit exhausts the gas from the inside of the bag member (4) so as to deform the retaining member (3) into a shape corresponding to the workpiece (10), and subsequently, the valve is closed to retain the shape of the retaining member (3) corresponding to the workpiece (10) so that the workpiece (10) is retained by the retaining member (3).

9. The conveyance system according to claim 8, wherein
by releasing the ventilation port, the retaining member (3) is restored from the shape corresponding to the workpiece (10) to a shape in a steady status.

10. The conveyance system according to claim 8, further comprising
an abutting member coming into contact with the workpiece (10) retained by the retaining member (3).

11. The conveyance system according to claim 10, wherein
the workpiece (10) retained by the retaining member (3) is held by a plurality of abutting members.

12. The conveyance system according to claim 8, wherein
a base member included in the pallet (1) includes a wall portion surrounding a circumference of the retaining member (3).

13. The conveyance system according to any one of claims 8 to 12, wherein
the retaining member (3) includes a covering member (9) whose material is selected depending on a material of the workpiece (10), and the covering member (9) covers a contact portion of the bag member (4), the contact portion of the bag member (4) being in contact with the workpiece (10).

14. The conveyance system according to claim 8, wherein
the retaining member (3) has a shape including a recessed portion (33a) in a steady status.

15. The conveyance system according to any one of claims 8 to 14, wherein
a shape of each particle included in the particle member (5) includes a shape having edge portions or a planar surface, or a shape having recesses and projections engageable with other particles.
